# EUROPÄISCHE PATENTSCHRIFT

(11) **EP 1 056 612 B1**
(45) Veröffentlichungstag und Bekanntmachung des Hinweises auf die Patenterteilung: **15.10.2003**
(21) Anmeldenummer: 98966686.2
(22) Anmeldetag: 29.12.1998
(51) Int. Cl.: B60K 15/04

(54) **SELBSTTÄTIG SCHLIESSENDER TANKDECKEL**
AUTOMATICALLY CLOSING TANK CAP
BOUCHON DE RESERVOIR A FERMETURE AUTOMATIQUE

(43) Veröffentlichungstag der Anmeldung: 06.12.2000
(73) Patentinhaber: Mecrom Ott U. Holey OHG, 83359 Hufschlag (DE)
(72) Erfinder: OTT, Siegfried, D-83359 Hufschlag (DE)
(74) Vertreter: Söllner, Udo, Dipl.-Ing.
(86) Internationale Anmeldenummer: EP9808499
(87) Internationale Veröffentlichungsnummer: WO00038941

(56) Entgegenhaltungen:
- US-A- 5 732 840
- US-A- 5 829 495

## Beschreibung

Die vorliegende Erfindung betrifft einen selbsttätig schließenden Tankdeckel für einen Einfüllstutzen eines Kraftstofftankes, bei dem der Stutzen eine damit gelenkig verbundene Schutzklappe besitzt und betrifft insbesondere einen selbsttätig schließenden Tankdeckel, der zur Verwendung mit einer automatischen Vorrichtung zur Befüllung mit Kraftstoff ausgebildet ist.

Solche selbsttätig schließenden Tankdeckel für die Kraftstofftanks von Kraftfahrzeugen sind bekannt. Diese gestatten es dem Benutzer, den Tank seines Kraftfahrzeuges zu betanken, ohne den Tankdeckel vom Einfüllstutzen abnehmen zu müssen.

Solche Tankdeckel weisen üblicherweise einen Deckelkörper auf mit Gewindegängen oder Bajonettverschlüssen zur Befestigung des Deckelkörpers an dem offenen Ende des Einfüllstutzens des Tanks des Kraftfahrzeugs. Der Deckelkörper besitzt dabei eine mittig angeordnete Öffnung zum Einführen des Mundstückes einer Zapfpistole einer entsprechenden Kraftstoffpumpe, wobei die Öffnung normalerweise von einer federbelasteten Verschlußklappe abgedeckt ist, die mit dem Deckelkörper gelenkig verbunden ist. Ein solcher Tankdeckel wird vom Benutzer des Kraftfahrzeuges am Einfüllstutzen des Kraftstofftanks aufgeschraubt. Um dann den Tank zu befüllen, wird das Mundstück der Zapfpistole der Kraftstoffpumpe durch die Öffnung in dem Deckelkörper zum Öffnen der Verschlußklappe hindurch eingeführt. Nach dem Tankvorgang wird das Mundstück der Zapfpistole aus der Öffnung des Deckelkörpers wieder herausgezogen, wodurch sich die federbelastete Verschlußklappe selbsttätig schließt. Ein solcher selbsttätig schließender Tankdeckel ist in dem US-Patent 4, 986, 439 beschrieben und beansprucht worden.

Wenn der Kraftstofftank eines Kraftfahrzeuges mit einer automatischen Vorrichtung zur Betankung, beispielsweise einem Tankroboter aufgetankt werden soll, dann wird das Mundstück der Zapfpistole nicht mehr von einem Benutzer durch die Öffnung des Deckelkörpers hindurch in den Einfüllstutzen eingeführt, sondern über einen Roboterarm. Dieser kann sich sowohl vertikal als auch horizontal bewegen, um das Mundstück der Kraftstoffpumpe mit dem Einfüllstutzen des Kraftstofftanks in Überdeckung zu bringen. Diese Ausrichtung wird dabei durch die Verwendung eines magnetischen Sensors für die Position im Roboterarm erleichtert. Nachdem die Ausrichtung abgeschlossen worden ist, fährt der Roboterarm das Mundstück der Zapfpistole zu dem Einfüllstutzen hin aus und zwar unter einem Winkel, der weitgehend rechtwinklig zur Seitenwand des Kraftfahrzeuges verläuft, die den Einfüllstutzen umgibt. Der Roboter führt dann das Mundstück durch die Öffnung in dem Deckelkörper hindurch und in den Einfüllstutzen des Kraftstofftanks ein, indem er die Verschlußklappe in dem Deckel weg drückt. Bei Fahrzeugen, die ausschließlich mit bleifreiem Kraftstoff betrieben werden, muß das Mundstück der Zapfpistole auch noch durch eine zweite, gelenkig angeordnete Klappe in dem Einfüllstutzen hindurch geführt werden, bevor der eigentliche Tankvorgang begonnen werden kann. Nach dem Abschluß der automatischen Betankung zieht der Roboterarm das Mundstück der Zapfpistole aus dem Einfüllstutzen und dem Deckel wieder heraus, damit sowohl die Schutzklappe in dem Einfüllstutzen als auch die Verschlußklappe in dem Deckel wieder ihre jeweiligen Verschlußstellungen einnehmen können.

Dabei ist es erforderlich, daß der Anlenkpunkt der Schutzklappe in dem Einfüllstutzen und der Anlenkpunkt der Verschlußklappe des Tankdeckels um etwa 180° zueinander versetzt angeordnet sind, damit sowohl das Einführen des Mundstückes der Zapfpistole als auch das Herausziehen aus dem Einfüllstutzen und dem daran angeordneten selbsttätig schließenden Tankdeckel durch den Roboterarm so ablaufen kann, daß kein Verkanten oder Verhaken an der Schutzklappe oder der Verschlußklappe des Deckels auftritt. Ein besonders gutes Beispiel eines solchen gattungsgemüβen selbsttätig schließenden Tankdeckels für die automatische Betankung ist in dem US-Patent 5, 720, 328 beschrieben und beansprucht.

Obwohl sich der in diesem US-Patent 5, 720, 328 beanspruchte Tankdeckel bereits bestens bewährt hat, hat es sich gezeigt, daß seine Verwendung nicht an allen Kraftfahrzeugen möglich ist. Es hat sich nämlich gezeigt, daß der zum Anbringen des Tankdeckels am Einfüllstutzen des Kraftstofftankes zur Verfügung stehende Aufnahmeraum bei manchen Kraftfahrzeugen sehr klein ist. Dies kann nun dazu führen, daß bei diesen Kraftfahrzeugen ein diesen Raum für den Zugriff auf den Einfüllstutzen abschließender an der Karosserie des Kraftfahrzeugs angeordneter Deckel mit dem am Einfüllstutzen befestigten Tankdeckel in Kontakt kommen kann.

Der vorliegenden Erfindung liegt daher zur Beseitigung des geschilderten Problems die Aufgabe zugrunde, einen selbsttätig schließenden Tankdeckel zu schaffen, der insbesondere für die automatische Betankung geeignet ist und sich dadurch auszeichnet, daß er eine kompakte Bauform besitzt, die wenig Bauraum einnimmt und darüber hinaus eine große Festigkeit besitzt, da damit gerechnet werden muß, daß der zum automatischen Betanken eingesetzte Roboterarm das Mundstück der Zapfpistole aus dem Tankdeckel auch mit größerer Zugkraft herausziehen kann, ohne daß der Tankdeckel dabei beschädigt werden darf.

Die Erfindung weist zur Lösung dieser Aufgabe die im Anspruch 1 angegebenen Merkmale auf. Vorteilhafte Ausgestaltungen hiervon sind in den weiteren Ansprüchen beschrieben.

Die Erfindung geht von der Erkenntnis aus, daß der für das Einführen des Mundstückes der Zapfpistole in den Einfüllstutzen zur Verfügung stehende Durchmesser einer Einführöffnung nicht verändert werden kann und daher die zur Bildung des Tankdeckels erforderlichen Bauteile und insbesondere deren Funktionsflächen bei dem ganz allgemein kreisförmigen Tankdeckel soweit wie möglich radial innen angeordnet werden müssen, um eine kompakte Bauform des Tankdeckels zu erreichen und damit auch die Festigkeit des Tankdeckels zu erhöhen.

Nach der Erfindung ist daher ein selbsttätig schließender Tankdeckel für einen Einfüllstutzen eines Kraftstofftankes, bei dem der Stutzen eine damit gelenkig verbundene Schutzklappe besitzt, vorgesehen, wobei der Tankdeckel einen Verschlußring zur lösbaren Anordnung am Stutzen und eine am Verschlußring drehbar angeordnete Verschlußklappenanordnung mit einem ringförmigen Bauteil und einer daran verschwenkbar angelenkten Verschlußklappe besitzt und eine Rasteinrichtung mit mindestens einer Rastfeder und Rastnasen aufweist derart, daß die Verschlußklappenanordnung in nur einer Richtung drehbar ist, wobei die mindestens eine Rastfeder (18) am ringförmigen Bauteil (12) angeordnet und die Rastnasen (7) am Verschlussring (2) einstückig vorgesehen sind *derart, dass die mindestens eine Rastfeder (18) weit radial innen angeordnet ist.* Mit der Anordnung der oder mehrerer Rastfedern am ringförmigen Bauteil der Verschlußklappenanordnung ist eine Anordnung getroffen, bei der die Rastfedern möglichst weit radial innen angeordnet werden können, wodurch der vom erfindungsgemäßen Tankdeckel eingenommene Bauraum deutlich verringert werden kann. Die der oder den Rastfedern zugeordneten Rastnasen sind am Verschlußring einstückig vorgesehen, so daß dieser vollständig einstückig ausgebildet werden kann und zwar ohne über Trennflächen oder dergleichen am Verschlußring angeformte Bauteile. Dies führt auch dazu, daß der Verschlußring fertigungstechnisch einfach hergestellt werden kann.
Die am Verschlußring vorgesehenen Rastnasen können dabei an einer ringförmigen Fläche in weitgehend gleichem Abstand in Umfangsrichtung zueinander ausgebildet sein. Es heißt dies mit anderen Worten, daß am Verschlußring eine ringförmige Funktionsfläche vorgesehen ist, an der die Rastnasen einstückig ausgebildet werden, die mit der oder den an der Verschlußklappenanordnung angeordneten Rastfedern so zusammenwirken, daß die Verschlußklappenanordnung bezüglich des am Einfüllstutzen des Kraftstofftanks angeordneten Verschlußringes in die zur Drehung vorgesehene Richtung weitgehend frei gedreht werden kann, in die andere Richtung aber sperrt.
Hierdurch ist es möglich, daß ein Benutzer den erfindungsgemäβen Tankdeckel über beispielsweise Gewindegänge oder Bajonettverschlüsse am Einfüllstutzen des Kraftstofftanks festlegt und zwar derart, daß der Tankdeckel in der weitgehend frei drehbaren Richtung am Einfüllstutzen aufgeschraubt wird soweit, bis er dort festliegend angeordnet ist und ein weiteres Drehen des Tankdeckels zu einem Verdrehen der Verschlußklappenanordnung relativ zum Verschlußring führt, so daß ein festeres Aufschrauben des Tankdeckels am Einfüllstutzen des Kraftstofftanks nicht mehr möglich ist. Wenn der erfindungsgemäße Tankdeckel in die entgegengesetzte Richtung gedreht werden soll, um ihn vom Einfüllstutzen des Kraftstofftanks abzunehmen, dann ist eine Relativbewegung der Verschlußklappenanordnung relativ zum Verschlußring nicht möglich, so daß der Tankdeckel vom Einfüllstutzen abgenommen werden kann. Durch die Drehung der Verschlußklappenanordnung relativ zum Verschlußring kann die am ringförmigen Bauteil der Verschlußklappenanordnung verschwenkbar angelegte Verschlußklappe so zu der mit dem Stutzen gelenkig verbundenen Schutzklappe gedreht werden, daß der Anlenkpunkt der Schutzklappe und der Anlenkpunkt der Verschlußklappe einander diametral um 180° versetzt gegenüberstehen. Dies macht es möglich, daß der zur automatischen Betankung eingesetzte Roboterarm das Mundstück der Zapfpistole ohne Verkanten durch die von der Verschlußklappe abgedeckte Öffnung des ringförmigen Bauteiles und durch die von der Schutzklappe abgedeckte Öffnung des Tankstutzens einführen und wieder herausziehen kann. Durch eine einstückige Ausbildung der Rastfedern am ringförmigen Bauteil und der Rastnasen am Verschlußring wird eine sehr kompakte Bauform erzielt, da die Rastfedern an dem zum Einführen des Mundstückes der Zapfpistole erforderlichen Öffnungsdurchmesser des Veschlußringes radial weit innen liegen und damit die Möglichkeit geschaffen worden ist, daß auch die zugehörigen Rastnasen an dem mit kleinem Durchmesser ausgebildeten Verschlußring vorgesehen werden können, so daß eine kompakte und damit hohe Festigkeit aufweisende Bauform erreicht wird.

Es ist dabei vorgesehen, daß mehrere Rastfedern am ringförmigen Bauteil in weitgehend gleichem Abstand in Umfangsrichtung zueinander beabstandet ausgebildet sind, wobei die Rastfedern an ihrer den Rastnasen zugeordneten Seite eine in Drehrichtung der Verschlußklappenanordnung schräg verlaufende Gleitfläche aufweisen, die unter elastischer Verformung der Rastfedern über die Rastnasen hinweg gleiten kann. Auch ist an den Rastnasen eine zur Gleitfläche der Rastfedern komplementär ausgebildete Gleitfläche vorgesehen, an denen die Gleitflächen der Rastfedern beim Drehen der Verschlußklappenanordnung in die freie Richtung gleiten können, so daß über eine Bewegung der Gleitflächen der Rastfedern und der Rastnasen aufeinander eine Relativdrehung der Verschlußklappenanordnung zum Verschlußring möglich ist, während eine in die entgegengesetzte Richtung gerichtete Verdrehung dieser beiden Bauteile relativ zueinander gesperrt ist. Über die elastische Verformung der an dem ringförmigen Bauteil ausgebildeten Rastfedern wird eine der freien Drehbewegung entgegengesetzte bestimmte Kraft aufgebaut, die vom Benutzer bei der Befestigung des erfindungsgemäßen Tankdekkels am Einfüllstutzen des Kraftstofftanks wahrgenommen werden kann und er damit feststellt, daß es nach dem Auftreten dieser Kraft nur mehr erforderlich ist, die Verschlußklappenanordnung so weit zu drehen, bis der Anlenkpunkt der Verschlußklappe dem Anlenkpunkt der Schutzklappe um 180° gegenüber versetzt vorliegt.

In Fortführung der Erfindung ist aber vorgesehen, daß die Rastnasen am Innenumfang und am Außenumfang der ringförmigen Fläche von einem Anlaufbund umgeben sind, der ein seitliches Ausweichen der Rastfedern verhindert.

An dem ringförmigen Bauteil der Verschlußklappenanordnung können an einer Umfangsfläche außen sich in Axialrichtung des ringförmigen Bauteiles erstreckende rippenartige Vorsprünge vorgesehen sein, die mit komplementär ausgebildeten Aufnahmen an einer Innenumfangsfläche einer Abdeckung des Tankdeckels in Eingriff bringbar sind. Es bedeutet dies mit anderen Worten, daß an der Verschlußklappenanordnung ein Oberteil oder eine Abdeckung mit Führungsflächen für die in den Tankdeckel einzuführende Zapfpistole aufgesetzt werden kann und zwar derart, daß das Oberteil an den Vorsprüngen festgelegt wird. Eine Drehbewegung des Oberteils führt nun zu einer entsprechenden Drehbewegung der Verschlußklappenanordnung, womit die Verschlußklappe in der vorstehend bereits erwähnten Weise zur Schutzklappe ausgerichtet werden kann.

An der Umfangsfläche des ringförmigen Bauteiles können an der Innenseite Vorsprünge ausgebildet werden, die mit der Oberseite des äußeren Anlaufbundes der ringförmigen Fläche zur drehbaren Befestigung der Verschlußklappenanordnung an dem Verschlußring in Eingriff bringbar sind. Hierdurch kann der Verschlußring mit der Verschlußklappenanordnung verrastet werden und zwar so, daß eine axiale Lagefixierung der Verschlußklappenanordnung am Verschlußring erreicht wird und die Verschlußklappenanordnung relativ zum Verschlußring in eine Richtung drehbar bleibt, wobei eine Relativdrehung in die andere Richtung durch das Zusammenwirken der Rastfedern und der Rastnasen unterbunden wird.

Es ist dabei vorgesehen, daß an der Oberseite des ringförmigen Bauteiles ein ringförmiger vorspringender Abschnitt vorgesehen ist, an dem die bereits erwähnte Verschlußklappe federbelastet dichtend zur Anlage kommt, wobei zu diesem Zweck an der Verschlußklappe ein Dichtring oder dergleichen vorgesehen sein kann. Die zur Beaufschlagung der Verschlußklappe vorgesehene Feder ist dabei an der Innenseite des vorspringenden Abschnitts gelagert. In dem Bereich der Lagerung der Verschlußklappe weist der Tankdeckel auch eine Entlüftungseinrichtung auf, die bei einem vorbestimmten Innendruck des Kraftstofftankes geöffnet wird, so daß das Entstehen eines unzulässigen Überdruckes in dem Kraftstofftank vermieden wird.

Die Erfindung wird im folgenden anhand der Zeichnung näher erläutert. Diese zeigt in:
Fig. 1 einen selbsttätig schließenden Tankdeckel nach der Erfindung in einer perspektivischen Explosionsdarstellung mit einer Abdeckung, einer Verschlußklappenanordnung und einem Verschlußring, die zum Tankdeckel zusammengesetzt werden;
Fig. 2 einen Tankdeckel im Schnitt;
Fig. 3 eine Verschlußklappenanordnung in einer Ansicht von unten.
Fig. 4 eine perspektivische Ansicht eines Tankdeckels (ohne eine Abdeckung dargestellt), dessen Verschlußklappenanordnung an dem Verschlußring installiert worden ist derart, daß die gelenkige Aufnahme oder Anlenkstelle der Verschlußklappe um 180° gegenüber der Anlenkstelle der Schutzklappe versetzt angeordnet ist;
Fig. 5A, 5B und 5C zeigen, wie der Verschlußring und die Verschlußklappenanordnung des Deckels mit Abdeckungen für den Dekkel ausgerüstet werden können, die Führungsflächen besitzen, die unter verschiedenen Winkel ausgerichtet sind, um einen Ausgleich für unter verschiedenen Winkeln angeordnete Einfüllstutzen zu gewähren, um das Einführen eines Einfüllstutzens beziehungsweise Mundstückes in den Deckel zu erleichtern; und
Fig. 6 einen Schnitt gemäß der Linie VI-VI nach Fig. 1 zur Darstellung der Entlüftungseinrichtung.

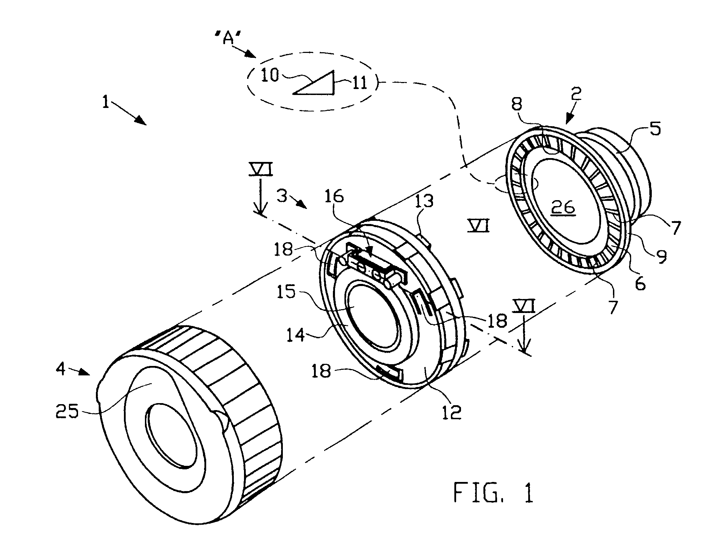

Der selbsttätig schließende Tankdeckel 1 nach der Erfindung weist in der in Fig. 1 dargestellten Ausführungsform einen Verschlußring 2, eine Verschlußklappenanordnung 3 und eine Abdekkung 4 auf.

Der Tankdeckel 1 kann mit einem am rohrstückförmig ausgebildeten Verschlußring 2 angeordneten Gewinde 5 am Einfüllstutzen eines Kraftstofftankes eines Kraftfahrzeuges festgelegt werden.

Alternativ zu dem in Fig. 1 dargestellten Gewinde 5 kann auch ein Bajonettverschluß am Verschlußring 2 ausgebildet sein.

Der Verschlußring 2 weist an seiner oberen, der Verschlußklappenanordnung 3 zugewandten Seite eine ringförmige Fläche 6 auf, an der in Umfangsrichtung in gleichem Abstand zueinander angeordnete Rastnasen 7 ausgebildet sind. Diese Rastnasen 7 dienen in Verbindung mit nachfolgend noch näher erläuterten Rastfedern zur Ausrichtung der Anlenkstelle einer an der Verschlußklappenanordnung 3 angeordneten Verschlußklappe 15 relativ zu einer im Einfüllstutzen des Kraftstofftankes angeordneten Schutzklappe.

Da die Rastnasen 7 in radialer Richtung nur eine sehr geringe Erstreckung aufweisen, ist es möglich, den Innen- und Außendurchmesser der ringförmigen Fläche 6 verglichen mit dem aus dem US-Patent 5, 720, 328 bekannten Tankdeckel, sehr klein auszubilden, wodurch eine ausgesprochen kompakte Bauform des gesamten Tankdeckels erreicht werden kann. Die ringförmige Fläche 6 ist an ihrem Innenumfang mit einem Anlaufbund 8 versehen, dem am Außenumfang ebenfalls ein Anlaufbund 9 gegenüberliegt. Beide Bunde dienen als Anlauf für die bereits erwähnten und nachfolgend noch näher erläuterten Rastfedern.

Die Rastnasen 7 besitzen, wie dies anhand der Einzelheit A nach Fig. 1 ersichtlich ist, eine in der Drehrichtung der Verschlußklappenanordnung 3 schräg verlaufende Gleitfläche 10, an der entsprechende an den Rastfedern ausgebildete Gleitflächen gleiten können. Eine Drehung der Verschlußklappenanordnung 3 an dem Verschlußring 2 in die entgegengesetzte Richtung wird über die an den Rastnasen 7 ausgebildete Anlauffläche 11 verhindert.

Die Verschlußklappenanordnung 3 besitzt ein ringförmiges Bauteil 12, an dessen Außenumfang sich in Axialrichtung des ringförmigen Bauteiles 12 erstreckende rippenartige Vorsprünge 13 ausgebildet sind, die mit komplementär ausgebildeten Aufnahmen an der Innenumfangsfläche der Abdeckung 4 des Tankdeckels in Eingriff gebracht werden können, und zwar um eine kraftschlüssige Verbindung zwischen der Abdeckung 4 und der Verschlußklappenanordnung 3 herzustellen, um den am Einfüllstutzen angeordneten Tankdeckel 1 drehen zu können.

An der Innenumfangsfläche des ringförmigen Bauteiles 12 ist ein ringförmiger vorspringender Abschnitt 14 angeordnet, der der Aufnahme einer federbelasteten Verschlußklappe 15 dient.

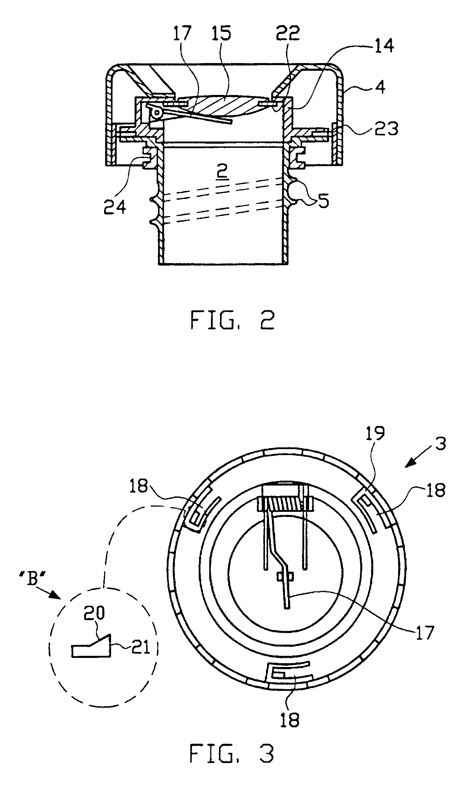

Wie dies im nachfolgenden noch näher anhand von Fig. 2 erläutert werden wird, wird die Verschlußklappe 15 über eine Feder 17 von innen gegen den vorspringenden ringförmigen Abschnitt 14 gedrückt. Die Feder 17 ist dabei unterhalb des ringförmigen vorspringenden Abschnittes 14 an der Verschlußklappenanordnung 3 gelagert. Im Bereich der Lagerung der Feder 3 ist eine Entlüftungseinrichtung 16 vorgesehen, die zur Entlüftung des Kraftstofftankes dient, wenn sich in diesem beispielsweise aufgrund hoher Temperaturen oder einer Beschädigung des Kraftstofftanks ein unzulässig hoher Druck einstellen würde, der dann über die Entlüftungseinrichtung 16 entspannt werden kann. An der der Verschlußklappenanordnung 3 zugewandten Rückseite der Abdeckung 4 sind nicht näher dargestellte Magnete angeordnet, die in Verbindung mit an einem Roboterarm einer automatischen Einrichtung zur Betankung angeordneten Sensoreinrichtung eine automatische Ausrichtung des Mundstückes und Betankung ermöglichen.

Am ringförmigen Bauteil 12 sind in der dargestellten Ausführungsform in Umfangsrichtung verteilt drei Rastfedern 18 in Aussparungen 19 (siehe Fig. 3) des ringförmigen Bauteiles 12 ausgebildet, die mit den an der ringförmigen Fläche 6 des Verschlußringes 2 ausgebildeten Rastnasen 7 zusammenwirken.

Wie dies näher anhand von Fig. 3 ersichtlich ist, besitzen die Rastfedern 18 Gleitflächen 20, die an den Gleitflächen 10 der Rastnasen 7 bei einer Drehung der Verschlußklappenanordnung 3 an dem Verschlußring 2 gleiten können, so daß die federnden Rastfedern 18 durch die Gleitflächen 20 an den steigenden Gleitflächen 10 der Rastnasen 7 elastisch federnd verformt werden und darüber hinweg schnappen, wenn die Gleitflächen 20 nicht mehr mit den Gleitflächen 10 in Kontakt stehen. Bei einer Drehung der Verschlußklappenanordnung 3 in die entgegengesetzte Richtung an dem Verschlußring 2 kommt die Anlauffläche 21 der Rastfeder 18 an der Anlauffläche 11 der Rastnase 7 zum Anschlag, so daß eine Drehung der Verschlußklappenanordnung 3 in diese Richtung blockiert wird.

Durch die Ausbildung der Rastfedern 18 am ringförmigen Bauteil 12 wird erreicht, daß die Verschlußklappenanordnung 3 deutlich weniger Bauraum einnimmt, als dies bei bekannten Tankdeckeln der Fall ist.

Fig. 2 zeigt eine Schnittdarstellung des zusammengesetzten Tankdeckels 1 nach der Erfindung.

Die Verschlußklappe 15 wird über die Feder 17 gegen den ringförmigen vorspringenden Abschnitt 14 gedrückt und zwar unter Zwischenschaltung einer Dichtscheibe 22. Im Betrieb wird die Verschlußklappe 15 von einem Mundstück einer in den Tankdeckel 1 eingeführten Zapfpistole weg gedrückt und zwar derart, daß die Verschlußklappe 15 gegen die Kraft der Feder 17 bei der in Fig. 2 ersichtlichen Stellung nach unten weg gedrückt wird. Die Abdeckung 4 besitzt an ihrer inneren Umfangsfläche Aufnahmen 23, die beim Aufsetzen der Abdeckung 4 auf die Verschlußklappenanordnung 3 mit den an dieser ausgebildeten Vorsprüngen 13 verrasten können. Der fertig montierte Tankdeckel 1 kann vom Benutzer am Einfüllstutzen des Kraftstofftankes über die Gewindegänge 5 aufgeschraubt werden, so daß die Dichtung 24 an der Unterseite der Verschlußklappenanordnung 3 am Einfüllstutzen dichtend zur Auflage kommt. Die Montage des Tankdeckels 1 am Einfüllstutzen geschieht dabei derart, daß der Tankdeckel 1 über die Gewindegänge 5 oder einen Bajonettverschluß am Einfüllstutzen festgelegt wird. Wenn der Tankdeckel 1 beispielsweise festgeschraubt worden ist, dann ist es nur noch erforderlich, die Verschlußklappe 15 hinsichtlich einer im Einfüllstutzen des Kraftstofftanks angeordneten Schutzklappe derart auszurichten, daß die Anlenkpunkte der Verschlußklappe 15 und der Schutzklappe um 180° zueinander versetzt sind. Hierzu muß der Benutzer des Tankdeckels 1 diesen nach seiner Montage am Einfüllstutzen des Kraftstofftanks nur mehr soweit in die von der Rasteinrichtung freigegebene Richtung drehen, bis diese Stellung erreicht worden ist. Zu diesem Zweck kann der Benutzer den Tankdeckel 1 über die Abdeckung 4, die an ihrer Außenwand mit Riffelungen versehen ist, sicher greifen und die Verschlußklappenanordnung 3 bezüglich des Verschlußringes 2 in die von den Rastnasen 7 und den Rastfedern 18 freigegebene Richtung, dem Uhrzeigersinn, drehen und zwar soweit, bis die angesprochene Winkelstellung zwischen dem Anlenkpunkt der Verschlußklappe 15 und dem Anlenkpunkt der im Einfüllstutzen angeordneten Schutzklappe erreicht worden ist, wobei sich in dieser Stellung der an der Vorderseite der Abdeckung 4 ausgebildete V-förmige Einschnitt 25 oben befindet.

Durch die Ausbildung der Rastfedern 18 am ringförmigen Bauteil 12 der Verschlußklappenanordnung 3 ist es möglich, diese hinsichtlich der zum Einführen des Mundstückes der Zapfpistole benötigten Einführöffnung 26 weit radial innen anzuordnen, so daß auch die am Verschlußring 2 ausgebildeten Rastnasen 7 radial weit innen liegen und somit eine ausgesprochen kompakte Bauform des Verschlußringes 2 und der Verschlußklappenanordnung 3 und damit des gesamten Tankdeckels 1 möglich wird.

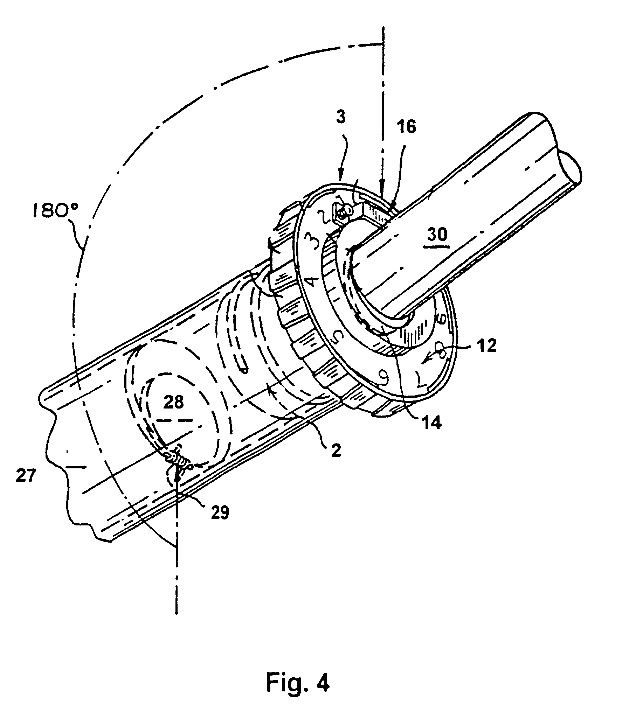

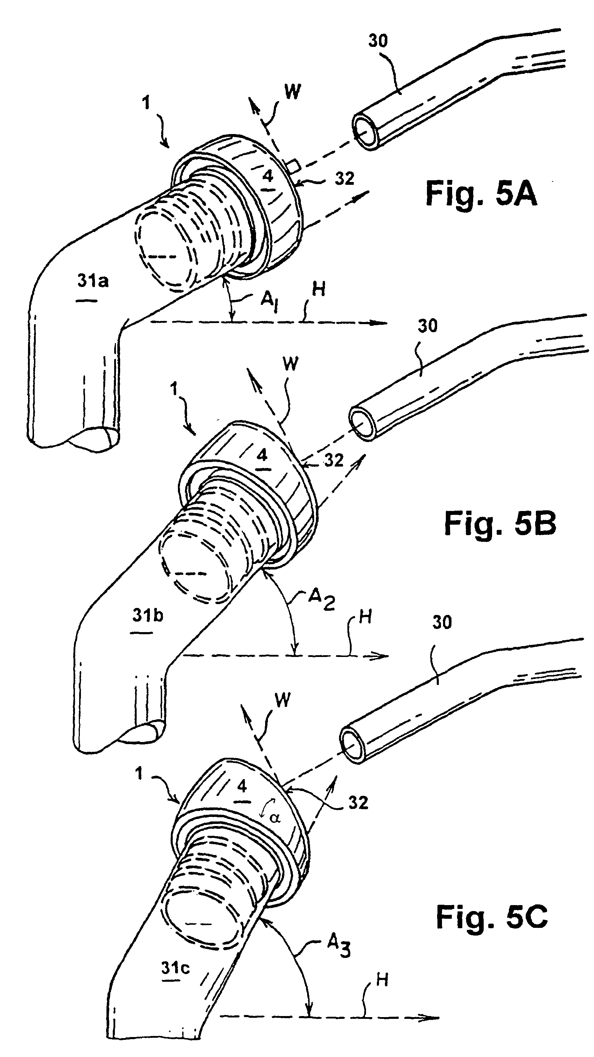

Die Funktionsweise und Verwendung der Erfindung wird nun anhand von Figur 4 und Figur 5A - 5C erläutert werden. Bei dem ersten Schritt zum Einsatz der Erfindung wird die Kombination aus dem Verschlußring 2 und der Verschlußklappenanordnung 3 auf das obere Ende eines Einfüllstutzens 27 eines Kraftfahrzeuges aufgeschraubt oder anderweitig befestigt. Für den Fall, daß der Einfüllstutzen 27 eine Schutzklappe 28 aufweist, die am inneren Durchmesser des Einfüllstutzens 27 mittels einer gelenkigen Verbindung 29 oder Anlenkstelle befestigt ist, wird die Rasteinrichtung dazu verwendet, die Verschlußklappenanordnung 3 bezüglich des Verschlußringes 2 so zu drehen, daß die Anlenkstelle der Verschlußklappe 15 (durch die Stellung 12-Uhr, die an der Vorderseite des ringförmigen Bauteiles 12 vorgesehen sein kann) um 180° gegenüber der gelenkigen Verbindung 29 zwischen der Schutzklappe 28 und dem Einfüllstutzen 27 angeordnet ist.

Eine derartige, sich gegenüberliegende Ausrichtung der Anlenkstellen richtet die Klappen 15 und 28 aus, wodurch es ermöglicht wird, daß das Mundstück 30 einer Zapfpistole weit genug in den Einfüllstutzen 27 eingeführt werden kann, um den Kraftstofftank (nicht dargestellt) zu befüllen. Eine solche Ausrichtung minimiert auch das Risiko, mit dem das Mundstück 30 einer Zapfpistole, welches durch sowohl die Verschlußklappe 15 als auch die Schutzklappe 28 hindurch verläuft, zwischen den Rändern der Klappen 15, 28 blockiert wird, wenn es heraus gezogen wird.

Figur 5A - 5C zeigen, wie die geeignete Neigung und Ausrichtung der Abdeckung 4 dazu verwendet werden kann, das Einführen des Mundstückes 30 in den Deckel 1 zu erleichtern. Diese Figuren zeigen unterschiedliche Einfüllstutzen 31a, b, c, von denen jeder unter einem unterschiedlichen Winkel A1, A2 und A3 bezüglich der Horizontalen H verläuft.

Bei einer Situation, bei der dieser Winkel relativ klein ist, wie es für den Stutzen 31a nach Figur 5A der Fall ist, ist eine obere Wand 32 weitgehend orthogonal bezüglich eines zylindrischen Montageabschnittes der Abdeckung 4 geneigt. Daher ist es einfach, daß das Mundstück 30 einer Zapfpistole ausgerichtet wird und durch die kreisförmige Öffnung 26, die von der Verschlußklappe 15 abgedeckt wird, durch die Verschlußklappenanordnung 3 hindurch eingeführt wird. Wenn aber der Einfüllstutzen mehr vertikal ausgerichtet ist, wie es bei dem Stutzen 31b nach Figur 5B der Fall ist, dann wird eine solche Ausrichtung und ein solches Einführen schwieriger aufgrund der schrägeren Ausrichtung zwischen dem Mundstück 30 und der Durchlassöffnung der Abdeckung 4. Demgemäß wird die obere Wand 32 des Deckels 1 unter einem solchen Winkel bezüglich der Fläche des ringförmigen Bauteiles der Verschlußklappenanordnung 3 ausgebildet, daß die winkelige Ausrichtung zwischen der oberen Wand 32 und dem Ende des Mundstückes 30 nach wie vor weitgehend orthogonal ist. In einem Fall, bei dem der Einfüllstutzen noch weiter vertikal ausgerichtet verläuft, wie es bei dem Stutzen 31c nach Figur 5C dargestellt ist, wird die obere Wand 32 unter einem noch größeren Winkel bezüglich des ringförmigen Bauteiles 12 der Verschlußklappenanordnung 5 ausgebildet. Das Vorsehen eines solchen steileren Winkels gestattet es wieder, daß das Ende des Mundstückes 30 mit einer Führungsfläche in Eingriff kommt, die von der oberen Wand 32 unter einem weitgehend orthogonalen Winkel gebildet wird. Ein solcher orthogonaler Eingriffswinkel ist insbesondere dann wichtig, wenn das Fahrzeug, zu dem der Einfüllstutzen gehört, von einer automatischen Maschine zur Betankung betankt wird, die ein Mundstück 30 besitzt, welches unter einem Winkel ausgefahren und zurückgezogen wird, der weitgehend orthogonal bezüglich der Wand W der Karosserieumgebung des Tankdeckels 1 verläuft.

Nachdem nun die Bedeutung des Winkels für den Eingriff zwischen dem Mundstück 30 und dem Deckel 1 erläutert worden ist, wird nachfolgend der Montageverlauf näher erläutert werden. Nachdem die Verschlußklappenanordnung 3 über dem Verschlußring 2, wie es unter Bezugnahme auf Figur 4 erläutert worden ist, montiert worden ist, muß der Benutzer die Abdeckung 4 installieren. Um diesen Schritt auszuführen, muß der Benutzer zunächst das Ausmaß des Winkels zwischen dem Einfüllstutzen und der Horizontalen H bestimmen. In Fällen, bei denen der Einfüllstutzen nur unter einem kleinen Winkel A1 verläuft, kann eine Abdeckung 4 mit einer weitgehend orthogonal ausgerichteten oberen Wand 32 mit guten Ergebnissen ausgewählt werden. In Fällen aber, bei denen der Einfüllstutzen unter einem größeren Winkel (Fig. 5c) bezüglich der Horizontalen H verläuft (wie es bei den Figuren 5B und 5C der Fall ist), wird eine Abdeckung 4, deren obere Wand 32 unter einem Winkel (siehe Winkel α) ausgebildet worden ist, gewählt werden, wobei die Größe des Winkels von dem Winkel A2, A3 zwischen dem Einfüllstutzen 31b, 31c und der Horizontalen H abhängig ist. Um eine solche winkelig ausgebildete Abdekkung in richtiger Weise über der Verschlußklappenanordnung 3 auszurichten, richtet der Benutzer des Deckels 1 den V-förmigen Einschnitt 25 so aus, daß er nach oben gerichtet angeordnet vorliegt.

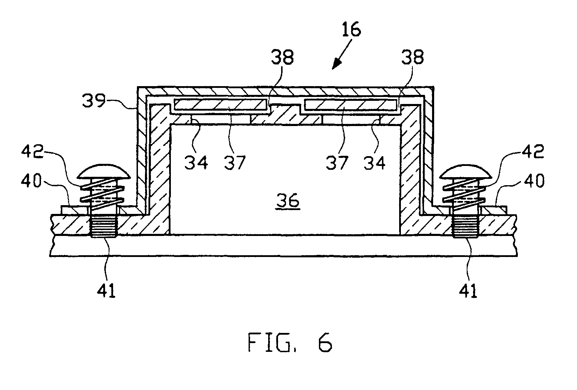

Fig. 6 zeigt eine Entlüftungseinrichtung 16, die zur Vermeidung von Überdruck in dem Kraftstofftank vorgesehen ist. Die Entlüftungseinrichtung 16 der dargestellten Ausführungsform dient dabei dazu, einen Überdruck abzubauen, wenn der Druck im Tank einen Wert von 11 kPa überschreitet. Dazu besitzt die Entlüftungseinrichtung zwei Öffnungen 34 in der oberen Wand 35 eines Lagerbockes 36. Zwei Ventilelemente in der Form von Ventilscheiben 37 sind über den Öffnungen 34 angeordnet, wobei jede der Scheiben in einem ringförmigen Ventilsitz 38 angeordnet ist, der jede der Öffnungen 34 umgibt.

Ein jochartiges Bauteil 39 übergreift die beiden Ventilscheiben und weist in seinem Fußbereich 40 Bohrungen auf, die von Stiften 41 durchsetzt werden.

An den Stiften 41 sind über die Stiftköpfe vorgespannte Federn 42 angeordnet. Wenn im Tank eine Überdrucksituation auftritt, dann wird der durch die Öffnungen 34 auf die Ventilscheiben 37 wirkende Druck so groß, daß die Federkraft der beiden Federn 42 überwunden wird und das Jochbauteil 39 leicht angehoben wird, so daß der Druck entweichen kann, bis sich wieder ein Kräftegleichgewicht zwischen dem Druck im Tank und den Federn 42 einstellt und die Ventilscheiben 37 über das Jochbauteil 39 wieder in ihren Sitz gedrückt werden.

Über eine Auswahl der Federsteifigkeit der Federn 42 kann der Öffnungsdruck der Entlüftungseinrichtung 16 eingestellt werden und zwar in einem Bereich von 10 kPa bis 100 kPa, vorzugsweise von 30 kPa bis 60 kPa. Der Durchmesser der Öffnungen 34 wird so gewählt, daß ein Entlüftungsvolumen von 100 bis 200 Liter pro Minute, vorzugsweise von etwa 160 Liter pro Minute erreicht wird.

Die Ventilscheiben 37 können aus Vinylfluorid oder einem Elastomer, wie beispielsweise Nitrilkautschuk (NBR) gebildet werden.

Die einzelnen Bauteile des Tankdeckels, wie beispielsweise der Verschlußring 2, die Verschlußklappenanordnung 3 und die Abdekkung 4 können aus einem Polyamid, vorzugsweise PA 6 mit einem Volumengehalt von 20 % bis 30 % an Kohlenstoffasern gebildet werden, um eine Widerstand von etwa 50 kOhm zu erhalten, um eine statische Aufladung des Tankdeckels zu vermeiden.

Obwohl die Erfindung anhand einer bevorzugten Ausführungsform erläutert worden ist, sind Ergänzungen, Modifikationen oder Veränderungen, die dem Fachmann geläufig sind, umfaßt.

Hinsichtlich vorstehend im einzelnen nicht näher erläuterter Merkmale der Erfindung wird im übrigen ausdrücklich auf die Ansprüche und die Zeichnung verwiesen.

## Patentansprüche

1. Selbsttätig schließender Tankdeckel für einen Einfüllstutzen eines Kraftstofftankes, bei dem der Stutzen (27) eine damit gelenkig verbundene Schutzklappe (28) besitzt, mit einem Verschlussring (2) zur lösbaren Anordnung am Stutzen (27) und einer am Verschlussring (2) drehbar angeordneten Verschlussklappenanordnung (3) mit einem ringförmigen Bauteil (12) und einer daran verschwenkbar angelenkten Verschlussklappe (15) und einer Rasteinrichtung mit mindestens einer Rastfeder (18) und Rastnasen (7) derart, dass die Verschlussklappenanordnung (3) in nur einer Richtung drehbar ist, **dadurch gekennzeichnet, dass** die mindestens eine Rastfeder (18) am ringförmigen Bauteil (12) an*geordnet* und die Rastnasen (7) am Verschlussring (2) *einstückig* vorgesehen sind *derart*, d*ass die mindestens eine Rastfeder (18) weit radial innen angeordnet ist.*

2. Tankdeckel nach Anspruch 1, **dadurch gekennzeichnet, dass** die Rastnasen (7) am Verschlussring (2) an einer ringförmigen Fläche (6) in weitgehend gleichem Abstand in Umfangsrichtung zueinander ausgebildet sind.

3. Tankdeckel nach Anspruch 1 oder 2, **dadurch gekennzeichnet, dass** mehrere Rastfedern (18) am ringförmigen Bauteil (12) in weitgehend gleichem Abstand in Umfangsrichtung zueinander ausgebildet sind.

4. Tankdeckel nach einem der Ansprüche 1 bis 3, **dadurch gekennzeichnet, dass** die Rastfedern (18) an ihrer den Rastnasen (7) zugeordneten Seite eine in Drehrichtung der Verschlussklappenanordnung (5) schräg verlaufende Gleitfläche (20) aufweisen, die unter elastischer Verformung der Rastfedern (18) über die Rastnasen (7) hinweg gleiten.

5. Tankdeckel nach einem der Ansprüche 1 bis 4, **dadurch gekennzeichnet, dass** die Rastnasen (7) eine zur Gleitfläche (20) der Rastfedern (18) komplementär ausgebildete Gleitfläche (10) aufweisen, an denen die Gleitfläche (20) der Rastfedern (18) beim Drehen der Verschlussklappenanordnung (3) in die freie Richtung gleiten.

6. Tankdeckel nach einem der Ansprüche 1 bis 5, **dadurch gekennzeichnet, dass** die Rastnasen (7) am Innenumfang und am Außenumfang der ringförmigen Fläche (6) von einem Anlaufbund (8, 9) umgeben sind, der ein seitliches Ausweichen der Rastfedern (18) verhindert.

7. Tankdeckel nach einem der Ansprüche 1 bis 6, **dadurch gekennzeichnet, dass** am ringförmigen Bauteil (12) an einer Umfangsfläche außen sich in Axialrichtung des Bauteiles (12) erstreckende rippenartige Vorsprünge (13) vorgesehen sind, die mit komplementär ausgebildeten Aufnahmen (23) an einer Innenumfangsfläche einer Abdeckung (4) des Tankdeckels in Eingriff bringbar sind.

8. Tankdeckel nach einem der Ansprüche 1 bis 7, **dadurch gekennzeichnet, dass** die Umfangsfläche an ihrer Innenseite Vorsprünge aufweist, die mit der Oberseite eines Anlaufbundes (9) der ringförmigen Fläche (6) zur drehbaren Befestigung der Verschlussklappenanordnung (5) an dem Verschlussring (2) in Eingriff bringbar sind.

9. Tankdeckel nach einem der Ansprüche 1 bis 8, **dadurch gekennzeichnet, dass** an der Oberseite des ringförmigen Bauteiles (12) ein ringförmiger vorspringender Abschnitt (14) vorgesehen ist, an dem die Verschlussklappe (15) federbelastet dichtend zur Anlage kommt.

10. Tankdeckel nach Anspruch 9, **dadurch gekennzeichnet, dass** eine Feder (17) zur Beaufschlagung der Verschlussklappe (15) an der Innenseite des vorspringenden Abschnittes (14) gelagert ist.

11. Tankdeckel nach einem der Ansprüche 1 bis 10, **dadurch gekennzeichnet, dass** am ringförmigen Bauteil (12) eine Entlüftungseinrichtung (16) angeordnet ist, die bei einem vorbestimmten Innendruck des Kraftstofftankes geöffnet wird.

## Claims

1. Automatically closing tank cap for a filler neck of a fuel tank, in which the neck (27) has a protective flap (28) hinge-connected thereto, comprising a closure ring (2) for detachable arrangement on the neck (27) and a closure flap arrangement (3) disposed rotatably on the closure ring (2) and comprising an annular component (12) and a closure flap (15) pivotally coupled thereto and a detent device comprising at least one detent spring (18) and detent lugs (7) such that the closure flap arrangement (3) is rotatable in one direction only, **characterized in that** the at least one detent spring (18) is disposed on the 'annular component (12) and the detent lugs (7) are provided integrally on the closure ring (2) in such a way that the at least one detent spring (18) is disposed radially far inside.

2. Tank cap according to claim 1, **characterized in that** the detent lugs (7) on the closure ring (2) are formed at a substantially identical distance in peripheral direction from one another on an annular face (6).

3. Tank cap according to claim 1 or 2, **characterized in that** a plurality of detent springs (18) are formed at a substantially identical distance in peripheral direction from one another on the annular component (12).

4. Tank cap according to one of claims 1 to 3, **characterized in that** the detent springs (18) at their side associated with the detent lugs (7) have a sliding face (20), which extends obliquely in the direction of rotation of the closure flap arrangement (5) and slides with simultaneous elastic deformation of the detent springs (18) over the detent lugs (7).

5. Tank cap according to one of claims 1 to 4, **characterized in that** the detent lugs (7) have a sliding face (10), which is of a complementary design to the sliding face (20) of the detent springs (18) and on which the sliding face (20) of the detent springs (18) slides upon rotation of the closure flap arrangement (3) in the free direction.

6. Tank cap according to one of claims 1 to 5, **characterized in that** the detent lugs (7) are surrounded at the inner periphery and at the outer periphery of the annular face (6) by a thrust collar (8, 9), which prevents lateral deflection of the detent springs (18).

7. Tank cap according to one of claims 1 to 6, **characterized in that** provided on the annular component (12) on a peripheral face at the outside are rib-like projections (13), which extend in axial direction of the component (12) and are bringable into engagement with complementary recesses (23) in an inner peripheral face of a cover (4) of the tank cap.

8. Tank cap according to one of claims 1 to 7, **characterized in that** the peripheral face on its inner side has projections, which are bringable into engagement with the upper side of a thrust collar (9) of the annular face (6) for the rotatable fastening of the closure flap arrangement (5) to the closure ring (2) .

9. Tank cap according to one of claims 1 to 8, **characterized in that** provided on the upper side of the annular component (12) is an annular projecting portion (14), against which the closure flap (15) comes to lie in a spring-loaded, sealing manner.

10. Tank cap according to claim 9, **characterized in that** a spring (17) for loading the closure flap (15) is mounted on the inner side of the projecting portion (14).

11. Tank cap according to one of claims 1 to 10, **characterized in that** disposed on the annular component (12) is a venting device (16) which, given a predetermined internal pressure of the fuel tank, is opened.

## Revendications

1. Bouchon de réservoir à fermeture automatique pour une goulotte de remplissage d'un réservoir de carburant, dans lequel la goulotte (27) possède un clapet de protection (28) relié à celle-ci de manière articulée, présentant un anneau de fermeture (2) pour une disposition amovible sur la goulotte (27) et un dispositif de clapet de fermeture (3) disposé sur l'anneau de fermeture (2) de façon mobile par rotation possédant un élément annulaire (12) et un clapet de fermeture (15) relié à celui-ci de manière articulée de façon à pouvoir pivoter et un dispositif d'encliquetage possédant au moins un ressort d'encliquetage (18) et des crans d'arrêt (7) de sorte que le dispositif de fermeture (3) ne peut tourner que dans un sens, **caractérisé en ce que** le au moins un ressort d'encliquetage (18) est disposé sur l'élément annulaire (12) et les crans d'arrêt (7) sur l'anneau de fermeture (2) sont prévus sous forme d'éléments individuels de sorte que le au moins un ressort d'encliquetage (18) est disposé radialement vers l'intérieur.

2. Bouchon de réservoir selon la revendication 1, **caractérisé en ce que** les crans d'arrêt (7) sont disposés sur l'anneau de fermeture (2) sur une surface annulaire (6) essentiellement à distance égale les uns des autres dans le sens de la circonférence.

3. Bouchon de réservoir selon la revendication 1 ou 2, **caractérisé en ce que** plusieurs ressorts d'encliquetage (18) disposés sur l'élément annulaire (12) sont disposés essentiellement à distance égale les uns des autres dans le sens de la circonférence.

4. Bouchon de réservoir selon l'une quelconque des revendications 1 à 3, **caractérisé en ce que** les ressorts d'encliquetage (18) présentent sur leur face dirigée vers les crans d'arrêt (7), une surface de glissement (20) orientée en biais par rapport au sens de rotation du dispositif de clapet de fermeture (5) qui glisse par dessus les crans d'arrêt (7) en même. temps que les ressorts d'encliquetage (18) se déforment de manière élastique.

5. Bouchon de réservoir selon l'une quelconque des revendications 1 à 4, **caractérisé en ce que** les crans d'arrêt (7) présentent une surface de glissement (10) formée de façon complémentaire à la surface de glissement (20) des ressorts d'encliquetage (18) sur laquelle la surface de glissement (20) des ressorts d'encliquetage (18) glisse lorsque l'on tourne le dispositif de clapet de fermeture (3) dans le sens de rotation libre.

6. Bouchon de réservoir selon l'une quelconque des revendications 1 à 5, **caractérisé en ce que** les crans d'arrêt (7) sont entourés d'un colleret (8,9) disposé sur la face interne et sur la face externe de la surface annulaire (6) qui empêche les ressorts d'encliquetage (18) de se déporter latéralement.

7. Bouchon de réservoir selon l'une quelconque des revendications 1 à 6, **caractérisé en ce que** des saillies en forme de nervures (13) s'étendant dans le sens axial de l'élément (12), sont prévues sur une surface circonférentielle de l'élément annulaire (12) coté externe, saillies que l'on peut encliqueter dans des logements formés de manière correspondante (23) sur une surface circonférentielle interne d'un couvercle (4) du bouchon de réservoir.

8. Bouchon de réservoir selon l'une quelconque des revendications 1 à 7, **caractérisé en ce que** la surface circonférentielle présente des saillies sur sa face interne que l'on peut encliqueter dans la face supérieure d'un collet (9) de la surface annulaire (6) afin de fixer par rotation le dispositif de clapet de fermeture (5) sur l'anneau de fermeture (2).

9. Bouchon de réservoir selon l'une quelconque des revendications 1 à 8, **caractérisé en ce qu'**un élément annulaire saillant (14) contre lequel le clapet de fermeture (15) est placé de façon étanche sous l'action d'un ressort est prévu sur la surface supérieure de l'élément annulaire (12).

10. Bouchon de réservoir selon la revendication 9, **caractérisé en ce qu'**un ressort (17) est logé sur la face interne de l'élément saillant (14) afin d'actionner le clapet de fermeture (15).

11. Bouchon de réservoir selon l'une quelconque des revendications 1 à 10, **caractérisé en ce que** l'on a disposé un dispositif de purge d'air (16) sur l'élément annulaire (12) qui s'ouvre lorsqu'une pression interne prédéfinie du réservoir de carburant est atteinte.
